# EUROPEAN PATENT SPECIFICATION

(11) **EP 1 024 098 B1**
(45) Date of publication and mention of the grant of the patent: **02.04.2003**
(21) Application number: 00101097.4
(22) Date of filing: 20.01.2000
(51) Int. Cl.: B65G 61/00, B65G 57/06

(54) **A method for palletising books, magazines, sheets, packages and the like**
Ein Verfahren zum Stapeln von Büchern, Magazinen, Papierbogen, Paketen oder Ähnlichem
Un procédé pour palettiser des livres, des magazines, des paquets, des feullies ou analogues

(30) Priority: 26.01.1999 IT VI990011
(43) Date of publication of application: 02.08.2000
(73) Proprietor: Mariani s.a.s. di Mariani Federico & C., 36010 Carre' (Vincenza) (IT)
(72) Inventor: Mariani, Paolo, 36016 Thiene (IT); Dal Zotto, Giovanni, 36016 Thiene (IT)
(74) Representative: Bettello, Pietro, Dott. Ing.

(56) References cited:
- EP-A- 0 794 138
- US-A- 5 842 827

## Description

The present invention relates to creation of a method of work for palletisation in the graphics field, for books, magazines, sheets, packages and similar products, which are simply stacked, ie. without elements for support, binding and the like, or for packages with different dimensions, which can be heat-shrunk or provided with straps, as well as a device which can implement this method.

There have been known for some time in the graphics industry methods which are designed for palletisation of books, magazines, packages and other similar products, which are disposed loose or gathered into packages, comprising a first step, in which, by means of conveyor belts or roller conveyors, the products to be palletised are transported and ordered in rows; a second step in which a thrust unit thrusts a row of products horizontally until it brings them to a loading surface of a transport head; a third step in which, by means of anthropomorphic movements, the transport head is positioned above the palletisation support; and finally a last step, in which, by appropriate means, products are transferred from the loading surface to the palletisation surface.

An object of the present invention is to provide a method which reduces as much as possible the length of the path which the transport head must travel in order to bring the products from the supply roller conveyor to the palletisation support.
An example of such a method is described in EP-A-0794138

A further object is to provide a method for palletisation with high productivity, which reduces to a minimum the time which the transport head takes for transfer from the roller conveyor to the palletisation surface, and vice versa.

A still further object is to provide a device, which, by functioning with the method according to the invention, can be used with different palletisation programmes, in relation with the various dimensions of the products to be processed, without needing to modify the structure of the device.

A further object is to provide a device which, by functioning with the method according to the invention, is simple to construct, and consists of parts which are not excessively sophisticated, and can easily be replaced in the event of breakage, even by unskilled workers.

The foregoing objects are achieved by means of a method for palletisation in which a transport head can be displaced from the supply roller conveyor to the palletisation support, and can be displaced above the products to be palletised, without ever having to pass completely beyond the palletisation surface, even during depositing of the row of products which is disposed furthest from the said roller conveyor.

This is achieved by providing a transport device or head which comprises a loading surface which can be displaced horizontally on a support bar, and two opposite substantially vertical stop walls, which can also slide on the said bar in an autonomous manner, and can also be displaced vertically.

By means of the combined movement of the loading surface, the two stop walls and the horizontal bar, the product is displaced from the roller conveyor until it is deposited on the palletisation surface, according to an order which is predetermined by the work programme of the machine.

In operation, the steps of execution of the method for palletisation according to the invention take place in succession, in the manner described hereinafter:
- First step -: the transport head is positioned such that the loading surface is taken to the same level as the roller conveyor or supply belt;
- Second step -: a thrust unit thrusts horizontally the product, which, for example, consists of a row or of a package of books, from the roller conveyor to the loading surface, until the said product abuts at the front the first vertical stop wall, which is disposed externally relative to the roller conveyor, and is previously positioned in relation to the length of the product itself;
- Third step -: lowering of the second vertical wall, which is disposed closest to the roller conveyor, and abuts the rear part of the products;
- Fourth step -: horizontal displacement, by means of sliding on the bar, of the loading surface, until the latter is positioned above the palletisation surface, in a position which is predetermined on the basis of the area preselected for depositing of the product;
- Fifth step -: horizontal displacement by means of sliding on the bar itself, of the two vertical stop walls and of the product contained between the latter, until the first wall, which is disposed outermost, is positioned in line with the end of the loading surface opposite that of intake of the product itself;
- Sixth step -: vertical displacement of the horizontal bar, until the loading surface is supported on the palletisation surface;
- Seventh step -: horizontal sliding, in a direction opposite the previous direction, of the loading surface, such as to release the product from beneath, and to allow the latter to be supported on the palletisation surface;
- Eighth step -: detachment from the product, and raising of the first stop wall, which is outermost, and subsequently, optionally also short horizontal displacement of the second stop wall, which is innermost, such as to displace the product which has just been deposited, such that it is in contact with the adjacent product, previously deposited on the palletisation surface, when it is required to produce a stack of palletised products which are adjacent to one another; and
- Ninth step -: return, with movements in the opposite direction, of the entire loading head, and positioning of the latter for a new palletisation cycle.

Advantageously, steps 4, 5 and 6 are carried out simultaneously, thus reducing substantially the operating time of the device, and consequently assisting increased productivity.

The steps of execution of the method according to the invention, as well as a possible embodiment of a device which functions according to this method, are described, purely by way of non-limiting illustrative example, by means of the attached drawings, in which:-
Figure 1 show a device according to one embodiment of the invention;
Figures 2 to 5 show schematically the steps of palletisation of the first product on the palletisation support; and
Figures 6 to 9 show schematically the steps of palletisation of the last product on the palletisation surface, consisting of a stack of products.

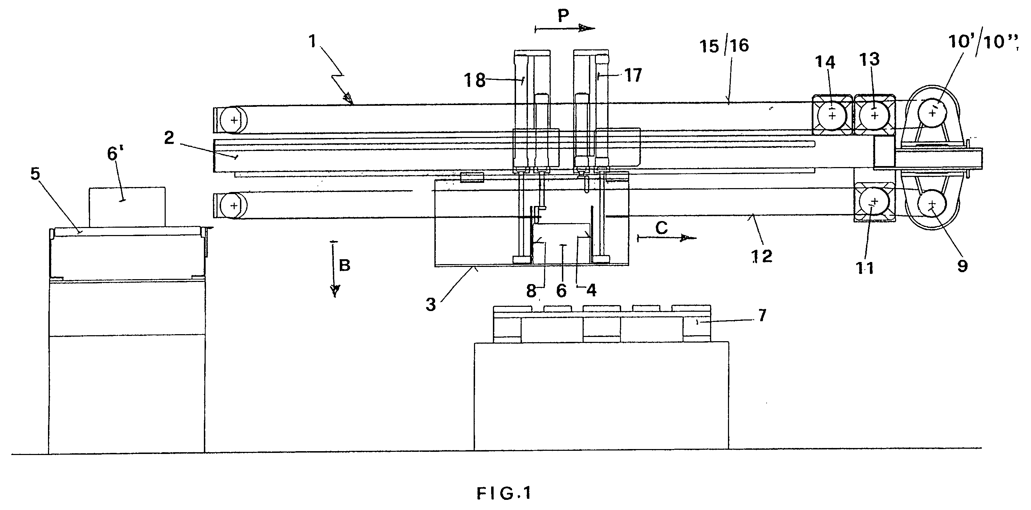

As can be seen in Figure 1, the transport device or head 1 comprises a transverse bar 2, on which there can slide in both directions a loading surface 3, a vertical stop wall 4, which is disposed externally, ie furtherest from the roller conveyor 5 on which there is disposed the product 6 to be palletised on the palletisation support 7, and a vertical stop wall 8, which is disposed internally, ie closest to the said roller conveyor.

Sliding on the bar 2 of the loading surface 3 and of the vertical stop walls 4 and 8 is preferably effected by means of three gear motors 9, 10' and 10", which are integral with the said bar. The motor 9 actuates the pulley 11, around which there is wound the cable 12, which is connected to both ends of the loading surface 3; whereas the motor 10' actuates the pulley 13, and the motor 10" (not shown) actuates the pulley 14. Around the pulleys, there are wound respectively the cables 15 and 16 which are connected one to the vertical stop wall 4, and the other to the vertical stop wall 8.

The vertical walls 4 and 8 are raised and lowered by means of the pneumatic cylinders 17 and 18 which are fitted to the sliding cages of the said walls.

The vertical displacement in both directions of the transverse bar 2 is obtained by means of systems of a known type, not shown.

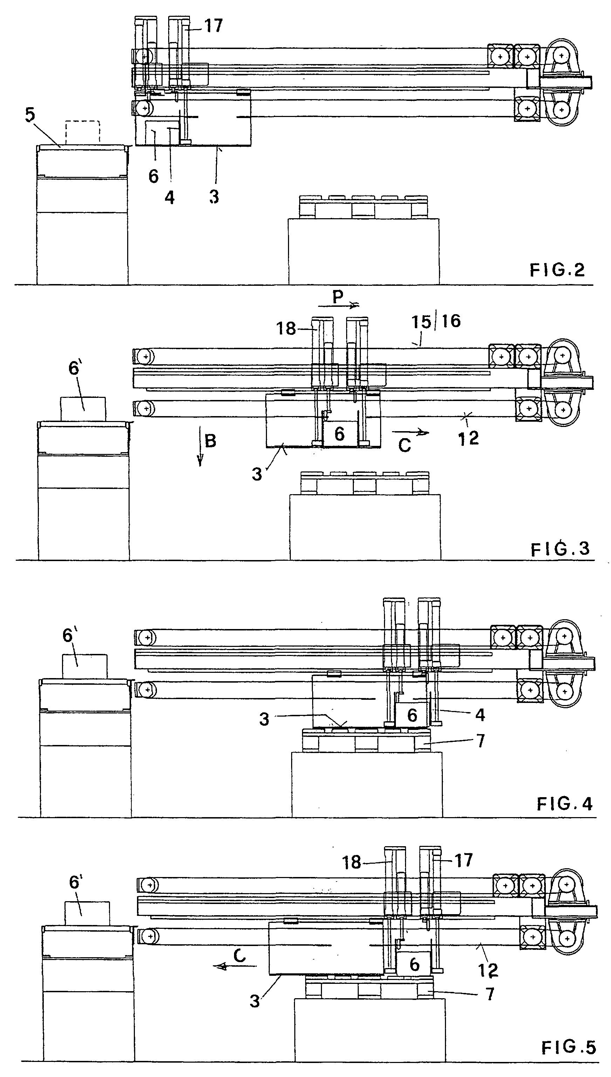

Figures 2-5 illustrate schematically the cycle of palletisation of the first product 6 to be deposited on the palletisation support 7, which is still empty.

In Figure 2, a thrust unit, which is not shown for the sake of simplicity, positions the product 6 from the roller conveyor on the loading surface 3, until the product is brought into contact with the vertical stop wall 4, which has previously been lowered.

Subsequently, the vertical stop wall 8 is also lowered, and thus restrains the product 6, as can be seen in Figure 3; these two walls slide on the bar 2, according to the arrow P, simultaneously with sliding on the bar itself of the loading surface 3, according to the arrow C, and again simultaneously, lowering takes place of the said bar 2 according to the arrow B.

As can be seen in Figure 4, the movement of the units stops when the loading surface 3 is supported on the palletisation support 7, and the product 6 is positioned at the far end of this surface.

Subsequently, as can be seen in Figure 5, the loading surface 3 slides in the opposite direction, according to the direction of the arrow C, the product 6 is released from beneath, and the stop wall 4 is detached slightly from the product itself, such that the latter can drop, and can be supported on the palletisation support 7, in the predetermined position.

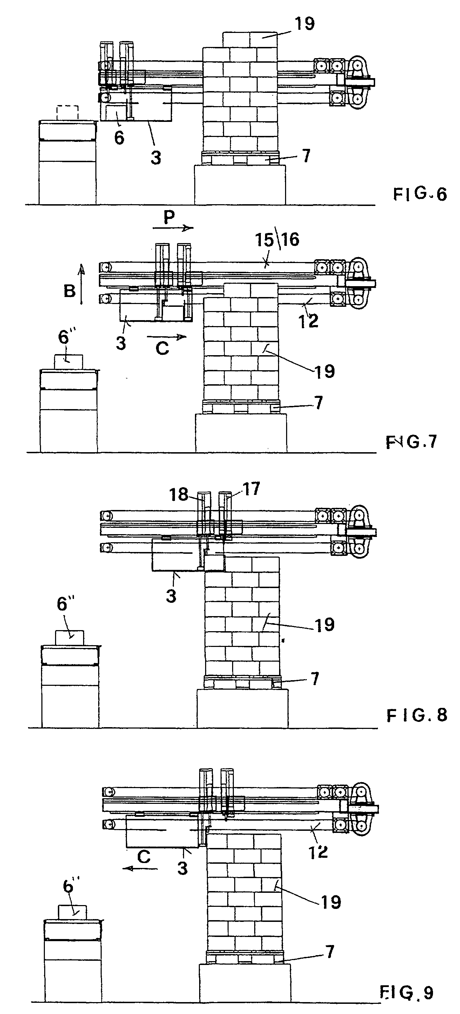

Figures 6-9 represent the cycle of palletisation of a product 6' to be deposited on the palletisation support 7, on which there is already present a stack 19 of products.

As can easily be appreciated by comparing Figures 2-4 and the corresponding Figures 6-8, the first steps of palletisation are similar to those previously described, with the sole difference that the transverse bar 2 is displaced in a vertically ascending direction, according to the direction of the arow B1, since the product must be deposited on the upper part of the stack 19.

The only operating difference consists in the last step where, as can be seen in Figure 9, the outer stop wall 4 is raised, in order to allow the product 6' to come into contact with the adjacent product 6" previously deposited, after the thrust which the latter has sustained, as a result of slightly forward displacement of the inner stop wall 8.

It is apparent from the preceding description that the above-described objects are fully achieved, the foremost of which is automating the operations of palletisation, all by means of a device which is very simple, and can be adapted to the various types and dimensions of the products to be processed, and which reduces substantially the execution times.

It will be appreciated that variants and/or modifications can be made both to the method and to the device according to the invention, without departing from the protective scope of the patent, as claimed hereinafter.

## Claims

1. A method for palletisation for the graphics industry of books, magazines, sheets, packages and similar products, which are simply stacked, ie without elements of support, binding and the like, or for packages with different dimensions, which can be heat-shrunk or provided with straps, which uses conveyor belts or roller conveyors (5) in order to transport and order in rows the products to be palletised, a thrust unit which thrusts a row of products on a loading surface, which, by means of anthropomorphic movements, is positioned above the palletisation support, where appropriate known means transfer products from the loading surface to,the palletisation surface, the said method being **characterised by** the work cycle, which specifically comprises the following steps:
first step: in which the transport head (1) is positioned such that the loading surface (3) is taken to the same level as the roller conveyor (5) or supply belt;
second step: in which a thrust unit thrusts horizontally the product (6), which, for example, consists of a row or of a package of books, from the roller conveyor to the loading surface (3), until the said product abuts at the front the first vertical stop wall (4), which is disposed externally relative to the roller conveyor, and is previously positioned in relation to the length of the product itself;
third step: in which there is lowering of the second vertical wall (8), which is disposed closest to the roller conveyor (5), and abuts the rear part of the product (6);
fourth step: in which there is horizontal displacement, by means of sliding on the bar, of the loading surface, until the latter is positioned above the palletisation surface, in a position which is predetermined on the basis of the area preselected for depositing of the product;
fifth step: in which there is horizontal displacement by means of sliding on the bar itself, of the two vertical stop walls (4, 8) and of the product (6) contained between the latter, until the first wall (4), which is disposed outermost, is positioned in line with the end of the loading surface opposite that of intake of the product itself;
sixth step: in which there is vertical displacement of the horizontal bar, until the loading surface is supported on the palletisation surface;
seventh step: in which there is horizontal sliding, in a direction opposite the previous direction, of the loading surface, such as to release the product from beneath, and to allow the latter to be supported on the palletisation surface;
eighth step: in which there is detachment from the product, and raising of the first stop wall (4), which is outermost, and subsequently, optionally also short horizontal displacement of the second stop wall (8), which is innermost, such as to displace the product which has just been deposited, such that it is in contact with the adjacent product, previously deposited on the palletisation surface, when it is required to produce a stack (19) of palletised products which are adjacent to one another; and
ninth step: in which there is return, with movements in the opposite direction, of the entire loading head, and positioning of the latter for a new palletisation cycle.

2. A method for the palletisation of products according to claim 1, the method comprising removing the product from a conveyor (e.g. a roller conveyor (5) or supply belt) and depositing the product (6) on a palletisation surface by a palletisation cycle comprising the steps:
(a) positioning a transport head (1) such that a loading surface thereof is at the same level as the conveyor;
(b) thrusting (e.g. by means of a thrust unit) the product substantially horizontally from the conveyor onto the loading surface, until the said product abuts a first substantially vertical stop wall (4), which is disposed externally relative to the conveyor, and is positioned in relation to the length of the product;
(c) lowering a second substantially vertical wall (8), which is disposed closest to the conveyor, and abuts a rear part of the product;
(d) effecting substantially horizontal displacement of the loading surface until it is positioned above the palletisation surface, in a position which is predetermined on the basis of the area preselected for depositing of the product;
(e) effecting substantially horizontal displacement of the two substantially vertical stop walls (4, 8) and of the product (6) disposed therebetween until the first wall (4), which is disposed outermost, is positioned substantially in line with the end of the loading surface opposite that of intake of the product itself);
(f) effecting substantially vertical displacement of the horizontal bar, until the loading surface is supported on the palletisation surface;
(g) sliding the loading surface in a substantially horizontal reverse direction so as to release the product from beneath, and to allow the latter to be supported on the palletisation surface;
(h) raising the first stop wall (4), and subsequently, optionally effecting also short horizontal displacement of the second stop wall (8), so as to displace the product which has just been deposited, such that it is in contact with an adjacent product, previously deposited on the palletisation surface; and
(i) re-positioning the transport head for a new palletisation cycle.

3. A method according to Claim 1 or Claim 2, **characterised in that** steps 4, 5 and 6 or claims (d), (e) and (f) are carried out simultaneously.

4. A method according to any one or more of Claims 1 to 3, **characterised in that** the transport head (1) can be displaced from the conveyor to the palletisation support (7), and can deposit on the latter from above the products to be palletised, without ever having to pass completely beyond the palletisation surface, even during depositing of the row of products which is disposed furthest from the said conveyor.

5. A device for use in the method of palletisation of any one or more of the preceding claims for palletisation, **characterised in that** it comprises a transport head having a loading surface, the transport head being displaceable in a horizontal direction along on a support bar; a pair of opposing vertical stop walls (4, 8), which are independently slidable on the said bar, and are displaceable vertically, wherein, by means of the combined movement of the said loading surface, the two stop walls (4, 8) and the horizontal bar, the product is displaced from the roller conveyor (5), until it is deposited on the palletisation surface, according to the method of any of the claims 1 to 4 predefined by the work programme of the device.

6. A device according to Claim 5, **characterised in that** the transport head (1) comprises a transverse bar (2) on which there can slide in both directions a loading surface (3), a vertical stop wall (4), which is disposed externally, ie furthest from the roller conveyor (5) on which there is disposed the product (6) to be palletised on the palletisation support (7), and a vertical stop wall (8), which is disposed internally, ie closest to the said roller conveyor, sliding on the bar (2) of the loading surface (3) and of the vertical stop walls (4, 8) being effected by means of motor units, preferably by means of three gear motors (9, 10', 10"), which are integral with the said bar, wherein a motor (9) actuates a pulley (11), around which there is wound the cable (12), which is connected at both ends to the loading surface (3), whereas the motor (10') actuates a pulley (13) and the motor (10") actuates a pulley (14), around which there are wound respectively the cables (15, 16), one of which is connected to the vertical stop wall (4) and the other is connected to the vertical stop wall (8), raising and lowering of the vertical stop walls (4, 8) being carried out by means of the actuators, preferably pneumatic cylinders (17, 18), which are fitted to the sliding cages of the said walls.

## Patentansprüche

1. Verfahren zum Stapeln von Büchern, Magazinen, Papierbögen, Paketen oder Ähnlichem für die Druckindustrie, die einfach gestapelt sind, d.h. ohne Stützelemente, Bindungen und dergl., oder für Pakete mit verschiedenen Abmessungen, die thermo-geschrumpft sind oder mit Binderiemen versehen sind, welches Transportbänder oder Rollförderer (5) zum Transportieren der zu stapelnden Produkte und Ordnen dieser Produkte in Reihen verwendet, eine Schubeinheit, die eine Reihe von Produkten auf eine Ladefläche schiebt, welche durch dreidimensionale Bewegungen über der Stapel-Trägereinrichtung positionierbar ist, wo geeignete bekannte Mittel die Produkte von der Ladefläche auf die Stapelfläche verlagern, wobei das Verfahren **gekennzeichnet ist durch** den Arbeitszyklus, der insbesondere die folgenden Schritte umfasst:
erster Schritt, bei dem der Transportkopf (1) so positioniert wird, dass die Ladefläche (3) auf dasselbe Niveau wie der Rollförderer (5) oder das Förderband verlagert wird;
zweiter Schritt, bei dem eine Schubeinheit das Produkt (6), welches beispielsweise aus einer Reihe oder einem Paket von Büchern besteht, von dem Rollförderer auf die Ladefläche (3) schiebt, bis das Produkt an die Frontfläche einer ersten vertikalen Anschlagwand (4) anstößt, die relativ zum Rollförderer außen angeordnet ist und zuvor selbst entsprechend der Länge des Produktes positioniert wird;
dritter Schritt, bei dem eine zweite vertikale Wand (8), die am dichtesten zum Rollförderer (5) angeordnet ist, abgesenkt wird und an den hinteren Teil des Produktes (6) anstößt;
vierter Schritt, bei dem eine horizontale Verschiebung der Ladefläche **durch** Gleiten auf einer Schiene stattfindet, bis sich die Ladefläche über der Stapelfläche in einer Position befindet, welche auf der Basis des zuvor ausgewählten Bereichs zum Absetzen des Produktes vorbestimmt ist;
fünfter Schritt, bei dem horizontales Verschieben **dadurch** stattfindet, dass die zwei vertikalen Anschlagwände (4, 8) und das zwischen ihnen befindliche Produkt (6) auf der Schiene selbst gleiten, bis die erste, am weitesten außen liegende Wand (4), in Linie mit dem der Aufnahmeseite des Produktes entgegengesetzten Ende der Ladefläche gebracht ist;
sechster Schritt, bei dem vertikale Verschiebung der horizontalen Schiene stattfindet, bis sich die Ladefläche auf der Stapelfläche abstützt;
siebter Schritt, bei dem horizontales Gleiten der Ladefläche in einer zur vorhergehenden Richtung entgegengesetzten Richtung stattfindet, so dass das Produkt unten freigegeben und auf der Stapelebene gelagert wird;
achter Schritt, bei dem das Produkt freigegeben und die erste, am weitesten außen liegende Anschlagwand (4) angehoben wird, und anschließend wahlweise auch eine kurze horizontale Verschiebung der zweiten Anschlagwand (8) erfolgt, welche am weitesten innen liegt, so dass das gerade abgesetzte Produkt verschoben wird und mit dem benachbarten, zuvor auf der Stapelfläche abgesetzten Produkt in Kontakt kommt, wenn es erforderlich ist, einen Stapel (19) von aneinander angrenzenden gestapelten Produkten herzustellen; und
neunter Schritt, bei dem ein Rücklauf des gesamten Ladekopfes mit Bewegungen in der entgegengesetzten Richtung und Positionierung des letzteren für einen neuen Stapelzyklus stattfindet.

2. Verfahren zum Stapeln von Produkten nach Anspruch 1, wobei das Verfahren umfasst: Abheben des Produktes von einem Förderer (z.B. einem Rollförderer (5) oder Transportband) und Absetzen des Produktes auf eine Stapelfläche durch einen Stapelzyklus umfassend die Schritte:
(a) Positionieren eines Transportkopfes (1), so dass sich eine Ladefläche auf demselben Niveau wie der Förderer befindet;
(b) Schieben (z.B. mittels einer Schubeinheit) des Produktes im wesentlichen horizontal von dem Förderer auf die Ladefläche, bis das Produkt an eine erste, im wesentlichen vertikale Anschlagwand (4) anstößt, welche relativ zu dem Förderer außen angeordnet ist und in Relation zur Länge des Produktes positioniert ist;
(c) Absenken einer zweiten, im wesentlichen vertikalen Wand (8), welche am dichtesten zum Förderer angeordnet ist und an einen hinteren Teil des Produktes anstößt;
(d) Herbeiführen einer im wesentlichen horizontalen Verschiebung der Ladefläche, bis diese über der Stapelfläche positioniert ist, in einer Position, die auf der Basis des zuvor ausgewählten Bereichs zum Absetzen des Produktes vorbestimmt ist;
(e) Herbeiführen einer im wesentlichen horizontalen Verschiebung der beiden im wesentlichen vertikalen Anschlagwände (4, 8) und des dazwischen befindlichen Produktes (6), bis die erste, am weitesten außen liegende Wand (4), im wesentlichen in Linie mit dem der Aufnahmeseite des Produktes entgegengesetzten Ende der Ladefläche angeordnet ist;
(f) Herbeiführen einer im wesentlichen vertikalen Verschiebung der horizontalen Schiene, bis die Ladefläche auf der Stapelfläche aufliegt;
(g) Gleiten der Ladefläche in einer im wesentlichen horizontalen Umkehr-Richtung, so dass das Produkt unten freigegeben und auf der Stapelfläche gelagert wird;
(h) Anheben der ersten Anschlagwand (4) und anschließendes wahlweises Herbeiführen auch einer kurzen horizontalen Verschiebung der zweiten Anschlagwand (8), so dass das gerade abgesetzte Produkt derart verschoben wird, dass es mit dem benachbarten, zuvor auf der Stapelfläche abgesetzten Prudukt in Kontakt gelangt; und
(i) Zurückstellen des Transportkopfes für einen neuen Stapelzyklus.

3. Verfahren nach Anspruch 1 oder 2, **dadurch gekennzeichnet, dass** die Schritte 4, 5 und 6 oder Ansprüche (d), (e) und (f) simultan ausgeführt werden.

4. Verfahren nach einem oder mehreren der Ansprüche 1 bis 3, **dadurch gekennzeichnet, dass** der Transportkopf (1) vom Förderer zum Stapelträger (7) verschoben werden kann und von oben die zu stapelnden Produkte auf letzterem absetzen kann, ohne jemals vollständig über die Stapelfläche hinaus verschoben werden zu müssen, auch nicht während des Absetzens der Reihe von Produkten, welche am weitesten von dem Förderer entfernt angeordnet ist.

5. Vorrichtung zur Verwendung bei dem Verfahren zum Stapeln nach einem oder mehreren der vorhergehenden Ansprüche, **dadurch gekennzeichnet, dass** sie umfasst: einen Transportkopf (1) mit einer Ladefläche, wobei der Transportkopf in horizontaler Richtung entlang einer Tragschiene verschiebbar ist; ein Paar gegenüberliegender vertikaler Anschlagwände (4, 8), welche unabhängig auf der Schiene gleiten können und vertikal verschiebbar sind, wobei durch die kombinierte Bewegung der Ladefläche, der beiden Anschlagwände (4, 8) und der horizontalen Schiene das Produkt von dem Rollförderer (5) verschoben wird, bis es, vordefiniert durch das Arbeitsprogramm der Vorrichtung, auf die Stapelfläche - gemäß dem Verfahren nach einem der Ansprüche 1 bis 4 - abgesetzt ist.

6. Vorrichtung nach Anspruch 5, **dadurch gekennzeichnet, dass** der Transportkopf (1) umfasst: einen Querträger (2), auf dem eine Ladefläche (3) in beiden Richtungen gleiten kann, eine vertikale Anschlagwand (4), die außen, d.h. am weitesten von dem Rollförderer (5) entfernt, angeordnet ist, auf dem das auf dem Stapelträger (7) zu stapelnde Produkt (6) angeordnet ist, und eine vertikale Anschlagwand (8), die innen, d.h. dem Rollförderer am nächsten liegend angeordnet ist, wobei das Gleiten der Ladefläche (3) und der vertikalen Anschlagwände (4, 8) auf der Schiene (2) mittels Motoreinheiten, vorzugsweise mittels dreier Getriebemotoren (9, 10', 10"), die in die Schiene integriert sind, realisiert ist, wobei ein Motor (9) eine Riemenscheibe (11) antreibt, um die ein Kabel (12) herumgeführt ist, welches an beiden Enden mit der Ladefläche (3) verbunden ist, während der Motor (10') eine Riemenscheibe (13) und der Motor (10") eine Riemenscheibe (14) antreibt, um die Kabel (15 bzw. 16) herumgeführt sind, wobei eines davon mit der vertikalen Anschlagwand (4) und das andere mit der vertikalen Anschlagwand (8) verbunden ist, wobei das Anheben und Absenken der vertikalen Anschlagwände (4, 8) mittels Kraftantrieben, vorzugsweise pneumatischer Zylinder (17, 18), erfolgt, welche an den Gleitkäfigen der Wände angebracht sind.

## Revendications

1. Procédé de palettisation pour l'industrie graphique de livres, magazines, feuilles, paquets et produits similaires, qui sont simplement empilés, c'est-à-dire dépourvus d'éléments de support, de cerclage et analogue, ou pour des paquets de différentes dimensions qui peuvent être emballés sous thermorétractable ou munis de sangles, qui utilise des courroies transporteuses ou des transporteurs à rouleaux (5) pour transporter les produits à palettiser et les ordonner en rangées, une unité de poussée qui pousse une rangée de produits sur une surface de chargement qui, sous l'effet de mouvements anthropomorphiques, est positionnée au-dessus du support de palettisation où des moyens connus appropriés transfèrent des produits de la surface de chargement à la surface de palettisation, ledit procédé étant **caractérisé par** le cycle de travail qui comprend spécifiquement les étapes suivantes :
première étape : dans laquelle la tête de transport (1) est positionnée de manière que la surface de chargement (3) soit amenée au même niveau que le transporteur à rouleaux (5) ou la courroie d'alimentation ;
deuxième étape : dans laquelle une unité de poussée pousse horizontalement le produit (6) qui, par exemple, est composé d'une rangée ou d'un paquet de livres, du transporteur à rouleaux à la surface de chargement (3), jusqu'à ce que ledit produit bute à l'avant contre la première paroi de butée verticale (4), laquelle est disposée extérieurement par rapport au transporteur à rouleaux et est préalablement positionnée en fonction de la longueur du produit lui-même ;
troisième étape : dans laquelle il se produit un abaissement de la deuxième paroi verticale (8) qui est disposée au plus près du transporteur à rouleaux (5) et bute contre la partie arrière du produit (6) ;
quatrième étape : dans laquelle il se produit un déplacement horizontal, par glissement sur la barre, de la surface de chargement, jusqu'à ce que cette dernière soit positionnée au-dessus de la surface de palettisation, dans une position qui est prédéterminée sur la base de la zone présélectionnée pour déposer le produit ;
cinquième étape : dans laquelle il se produit un déplacement horizontal, par glissement sur la barre elle-même, des deux parois de butée verticales (4, 8) et du produit (6) contenu entre ces dernières, jusqu'à ce que la première paroi (4), qui est disposée le plus à l'extérieur, soit positionnée en ligne avec l'extrémité de la surface de chargement qui est à l'opposé de celle de l'entrée du produit lui-même ;
sixième étape : dans laquelle il se produit un déplacement vertical de la barre horizontale, jusqu'à ce que la surface de chargement soit supportée par la surface de palettisation ;
septième étape : dans laquelle il se produit un glissement horizontal, dans une direction opposée à la direction précédente, de la surface de chargement de manière à libérer le produit par dessous et permettre à ce dernier d'être supporté par la surface de palettisation ;
huitième étape : dans laquelle il se produit une séparation par rapport au produit et une élévation de la première paroi de butée (4) qui est le plus à l'extérieur et, ensuite, facultativement, également un court déplacement horizontal de la deuxième paroi de butée (8) qui est le plus à l'intérieur, de manière à déplacer le produit qui vient juste d'être déposé, de manière qu'il soit en contact avec le produit adjacent, précédemment déposé sur la surface de palettisation, lorsqu'il est nécessaire de produire un empilement (19) de produits palettisés qui sont adjacents l'un à l'autre ; et
neuvième étape : dans laquelle il se produit un retour, avec des mouvements dans la direction opposée, de la tête de chargement complète, et un positionnement de cette dernière pour un nouveau cycle de palettisation.

2. Procédé pour la palettisation de produits selon la revendication 1, le procédé consistant à enlever le produit d'un transporteur (par exemple un transporteur à rouleaux (5) ou une courroie d'alimentation) et à déposer le produit sur une surface de palettisation par un cycle de palettisation, comprenant les étapes :
(a) positionner une tête de transport (1) de manière que sa surface de chargement soit au même niveau que le transporteur ;
(b) pousser le produit (par exemple au moyen d'une unité de poussée) sensiblement horizontalement du transporteur à la surface de chargement, jusqu'à ce que ledit produit bute contre une première paroi de butée sensiblement verticale (4), laquelle est disposée extérieurement par rapport au transporteur et est positionnée en fonction de la longueur du produit ;
(c) abaisser une deuxième paroi sensiblement verticale (8) qui est disposée le plus près du transporteur, et qui bute contre une partie arrière du produit ;
(d) effectuer un déplacement sensiblement horizontal de la surface de chargement jusqu'à ce qu'elle soit positionnée au-dessus de la surface de palettisation, dans une position qui est prédéterminée sur la base de la zone présélectionnée pour déposer le produit ;
(e) effectuer un déplacement sensiblement horizontal des deux parois de butée sensiblement verticales (4, 8) et du produit (6) disposées entre ces dernières, jusqu'à ce que la première paroi (4), qui est disposée le plus à l'extérieur, soit positionnée sensiblement en ligne avec l'extrémité de la surface de chargement qui est à l'opposé de celle de l'entrée du produit lui-même ;
(f) effectuer un déplacement sensiblement vertical de la barre horizontale, jusqu'à ce que la surface de chargement soit supportée par la surface de palettisation ;
(g) faire glisser la surface de chargement dans une direction inverse sensiblement horizontale, de manière à libérer le produit par dessous et de permettre à ce dernier d'être supporté par la surface de palettisation ;
(h) élever la première paroi de butée (4) et, ensuite, facultativement, effectuer également un court déplacement horizontal de la deuxième paroi de butée (8), de manière à déplacer le produit qui vient juste d'être déposé, de manière qu'il soit en contact avec le produit adjacent, précédemment déposé sur la surface de palettisation ; et
(i) repositionner la tête de transport pour un nouveau cycle de palettisation.

3. Procédé selon la revendication 1 ou la revendication 2, **caractérisé en ce que** les étapes 4, 5 et 6 ou les caractéristiques (d), (e) et (f) sont exécutées simultanément.

4. Procédé selon une quelconque ou plusieurs des revendications 1 à 3, **caractérisé en ce que** la tête de transport (1) peut être déplacée du transporteur au support de palettisation (7) et peut déposer sur cette dernière, par dessus, les produits à palettiser sans même avoir à passer complètement au-delà de la surface de palettisation même pendant le dépôt de la rangée de produits qui est disposée le plus loin dudit transporteur.

5. Dispositif destiné à être utilisé dans le procédé de palettisation selon une quelconque ou plusieurs des revendications précédentes pour 1a palettisation, **caractérisé en ce qu'**il comprend une tête de transport (1) ayant une surface de chargement, la tête de transport pouvant être déplacée dans une direction horizontale le long d'une barre de support, une paire de parois de butée verticales opposées (4, 8) qu'on peut faire coulisser indépendamment sur ladite barre et qui peuvent être déplacées verticalement, dans lequel, au moyen du déplacement combiné de ladite surface de chargement, des deux parois de butée (4, 8) et de la barre horizontale, le produit est éloigné du transporteur à rouleaux (5) jusqu'à ce qu'il soit déposé sur la surface de palettisation, selon le procédé de l'une quelconque des revendications 1 à 4, prédéfinis par le programme de travail du dispositif.

6. Dispositif selon la revendication 5, **caractérisé en ce que** la tête de transport (1) comprend une barre transversale (2) sur laquelle une surface de chargement (3) peut coulisser dans les deux directions, une paroi de butée verticale (4) qui est disposée extérieurement, c'est-à-dire le plus loin du transporteur à rouleaux (5) sur lequel est disposé le produit (6) qu'il s'agit de palettiser sur le support de palettisation (7), et une paroi de butée verticale (8) qui est disposée intérieurement, c'est-à-dire au point le plus rapproché dudit transporteur à rouleaux, le coulissement, sur la barre (2), de la surface de chargement (3) et des parois de butée verticales (4, 8), étant exécuté au moyen d'unités motrices, de préférence au moyen de trois moteurs-réducteurs (9, 10', 10") qui sont intégrés à ladite barre, dans lequel un moteur (9) actionne une poulie (11) autour de laquelle est enroulé le câble (12), lequel est relié à la surface de chargement (3) à ses deux extrémités, tandis que le moteur (10') actionne une poulie (13) et que le moteur (10") actionne une poulie (14) autour de laquelle sont enroulés respectivement les câbles (15, 16), dont l'un est relié à la paroi de butée verticale (4), et l'autre est relié à la paroi de butée verticale (8), l'élévation et l'abaissement des parois de butée verticales (4, 8) étant exécutés au moyen des actionneurs, de préférence des cylindres pneumatiques (17, 18) qui sont prévues sur les cages à coulisse desdites parois.
